# EUROPEAN PATENT SPECIFICATION

(11) **EP 3 650 170 B1**
(45) Date of publication and mention of the grant of the patent: **20.09.2023**
(21) Application number: 19206907.8
(22) Date of filing: 04.11.2019
(51) Int. Cl.: B23Q 11/08

(54) **MODULE FOR TELESCOPIC PROTECTIVE COVERING AND TELESCOPIC COVERS MADE WITH A PLURALITY OF THE MODULES**
MODUL FÜR TELESKOPISCHE SCHUTZABDECKUNG UND TELESKOPISCHE ABDECKUNGEN AUS MEHREREN MODULEN
MODULE POUR REVÊTEMENT PROTECTEUR TÉLESCOPIQUE ET COUVERTURE TÉLESCOPIQUE FABRIQUÉE À L'AIDE D'UNE PLURALITÉ DE MODULES

(30) Priority: 06.11.2018 IT 201800010080
(43) Date of publication of application: 13.05.2020
(73) Proprietor: P.E.I. Protezioni Elaborazioni Industriali S.r.l., 40012 Calderara di Reno (Bologna) (IT)
(72) Inventor: MARDEGAN, Vittorio, 26037 SAN GIOVANNI IN CROCE (CREMONA) (IT)
(74) Representative: Milli, Simone

(56) References cited:
- WO-A1-2014/020453
- DE-U1- 8 908 847
- DE-U1- 20 311 498
- JP-A- 2008 012 639

## Description

This invention relates to a module for telescopic protective covering, as well as a telescopic cover made with a plurality of the modules.

The protection of areas is known in the industrial protection sector by using telescopic covers equipped with modules acting in conjunction with each other to define, with respective upper covering walls partly superposed on each other, an overall surface which is able to cover the area in question.

Moreover, in order to improve the protection in particular with regard to the penetration of liquids, the prior art also associates to the modules an extendible bellows which is able to retain any liquids or detritus which could pass the barrier defined by the upper walls of the modules.

According to a first solution, the bellows may be single or according to a second solution several bellows may be made provided, each associated with a pair of adjacent modules.

These bellows, which are fixed at their ends to respective adjacent covering modules, require a lower support to keep the bellows correctly positioned without unwanted bending of the bellows.

For this purpose, specific bellows supporting structures are used which support the bellows.

These solutions are complex and expensive, as well as bulky with particular reference to the minimum dimension of the telescopic structure in the condition of maximum shortening.

Document JP2008012639 discloses a new bellows formed of: a bellows main bodywhich consists of alternately formed ridges and valleys, and is expandable/contractible, bellows support plates fixed to the respective ridges in a manner hanging downward from the same; and a plurality of protective plates which have fixed plate portions, each having proximal end thereof fixed to the vicinity of the ridge constituting the bellows main body, and protective plate portions located on the bellows main body.

The aim of the invention is to provide a module for telescopic protective covering, as well as a telescopic cover made with a plurality of the modules, which are simple and inexpensive.

Another aim of the invention is to provide a module for telescopic protective covering, as well as a telescopic cover made with a plurality of the modules, which allow a reduction in the overall dimensions in the particular condition of maximum shortening of the telescopic cover.

The aims specified are substantially achieved by a module for telescopic protective covering according to any one of claims 1 to 16.

Further features and advantages of the invention are more apparent in the non-limiting description which follows of a preferred non-limiting embodiment of a module for telescopic protective covering, as well as a telescopic cover made with a plurality of the modules, as illustrated in the accompanying drawings, in which:
- Figure 1 is a vertical plane view, with some parts cut away in order to better illustrate others, of a cover according to a first embodiment of the invention;
- Figure 2 is an enlarged view of a detail of Figure 1;
- Figure 3 is a perspective view from above of the cover of Figure 1 in a partly extended configuration;
- Figure 4 is an enlarged view of a detail of Figure 3;
- Figure 5 is a perspective view from below of the cover of Figure 1 in a configuration of maximum extension;
- Figure 6 is an enlarged view of a detail of Figure 5;
- Figure 7 is a perspective view from below of the cover of Figure 1 in a configuration of minimum extension;
- Figure 8 is an enlarged view of a detail of Figure 7;
- Figure 9 is a perspective view of a cover according to a second embodiment of the invention in an open configuration;
- Figures 10-11 are perspective views of the cover of Figure 9 in a closed configuration;
- Figure 12 is a cross section of the cover of Figure 9 in an open configuration;
- Figures 13 and 14 are perspective views in accordance with a third embodiment of the invention in an open configuration;
- Figure 15 is a perspective view of a respective detail of Figure 14;
- Figures 16 and 17 are perspective views in accordance with the third embodiment of the invention in a closed configuration;
- Figure 18 is a cross section of the third embodiment of the invention in an open configuration;
- Figures 19 and 20 are perspective views in accordance with a fourth embodiment of the invention in a closed configuration;
- Figure 21 is a perspective view of the fourth embodiment of the invention in an open configuration;
- Figure 22 is a perspective view of a respective detail of Figure 21;
- Figure 23 is a cross section of the fourth embodiment of the invention in an open configuration;
- Figures 24 and 25 are perspective views in accordance with a fifth embodiment of the invention in a closed configuration;
- Figure 26 is a perspective view of the fifth embodiment of the invention in an open configuration;
- Figure 27 is a cross section of the fifth embodiment of the invention in an open configuration;
- Figures 28 to 29 illustrate respective perspective views in accordance with a sixth embodiment not covered by the claims in respective closed and open configurations;
- Figure 30 is a cross section of the sixth embodiment in an open configuration.

With reference to the accompanying drawings, the numeral 1 denotes in its entirety a telescopic cover (preferably for a processing machine, for example a machine tool or the like) according to the invention.

The invention also defines a module 10 for telescopic protective covering, comprising:
- a protective upper wall 11 forming a first protective surface S1 and movable along a movement direction A;
- a load-bearing structure 13 for supporting the upper wall 11;
- a protective element 14 of the bellows type extendible along a sliding direction A of the module 10.

The protective element 14 is positioned below the upper wall 11.

The extendible protective element 14 defines a second protective surface (S2) with a variable extension between two adjacent modules 10. According to the invention, the module 10 comprises a support 15 configured for retaining the extendible protective element 14 and located below the upper wall 11.

It should be noted that the support 15, like the extendible protective element 14, of the cover 1 may be single or multiple (that is, the cover 1 may comprise a plurality of supports 15 / extendible protective elements 14). The cover 1 comprises a succession of covering modules 10, in particular intermediate modules, slidable along a sliding direction "A" (in which there is, according to some embodiments, in particular the embodiments from the first to the fifth, a guide 100) and arranged one after another along the sliding direction. In particular, each module comprises an upper protective wall 11, forming a first protective surface "S1".

According to the invention the covering module 10 comprises at least one base portion 12 designed for slidably coupling with at least one respective guide 100 of the module, and a load-bearing structure 13, preferably but not necessarily portal-shaped, which extends vertically between the upper wall 11 and the base portions 12 for supporting the upper wall 11 relative to the base portions 12.

Each base portion 12 is coupled or can be coupled to the respective guide 100, preferably by means of one or more rolling supports, for example wheels or rollers, or alternatively runners or other sliding devices, configured for moving the module 10 along the sliding direction "A". Therefore, more generally speaking, each base portion 12 is coupled or can be coupled to the respective guide 100 in such a way as to be movable along it.

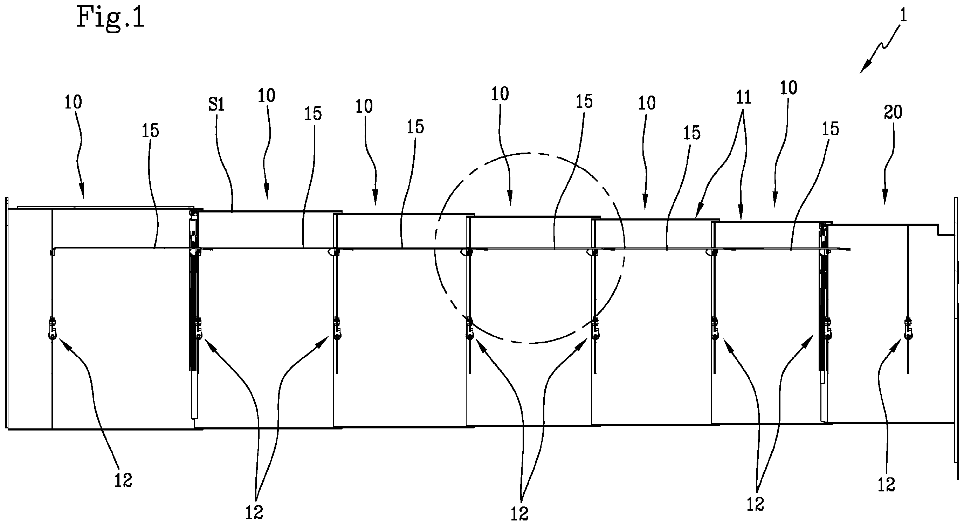

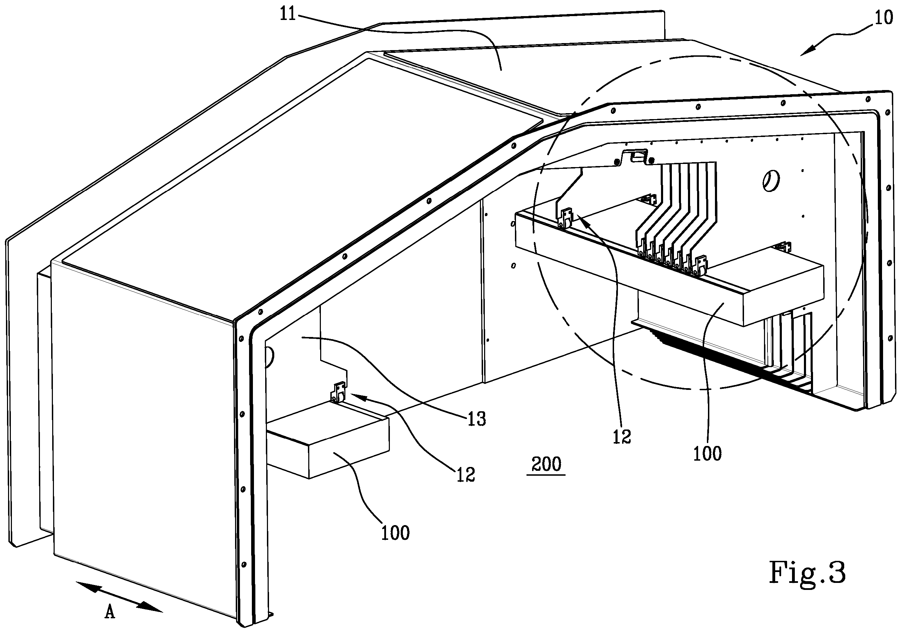

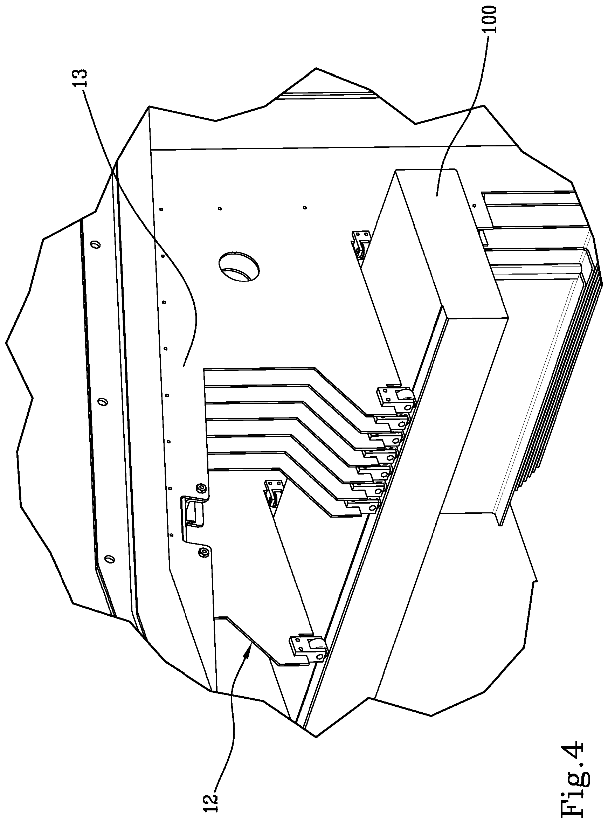

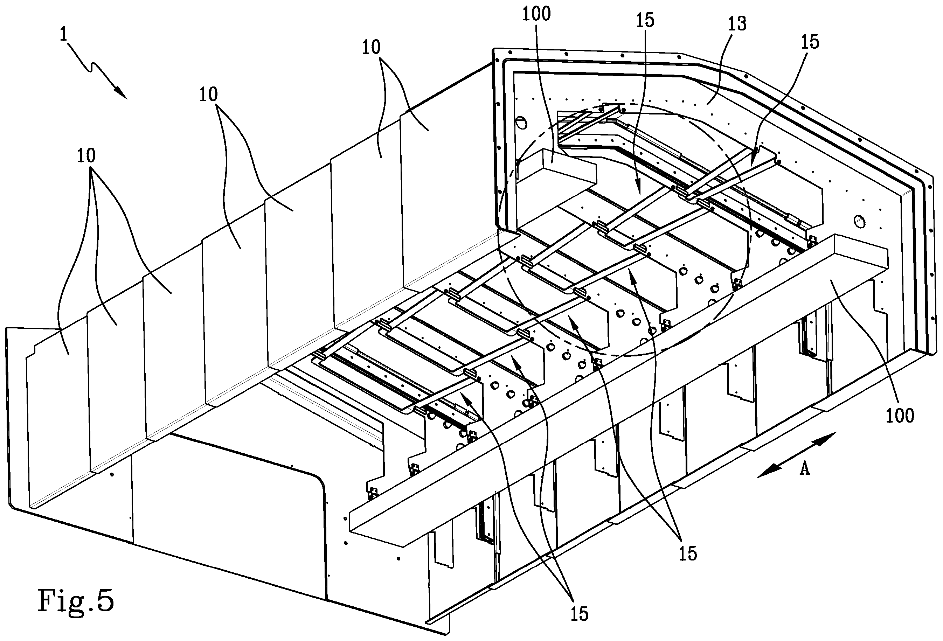

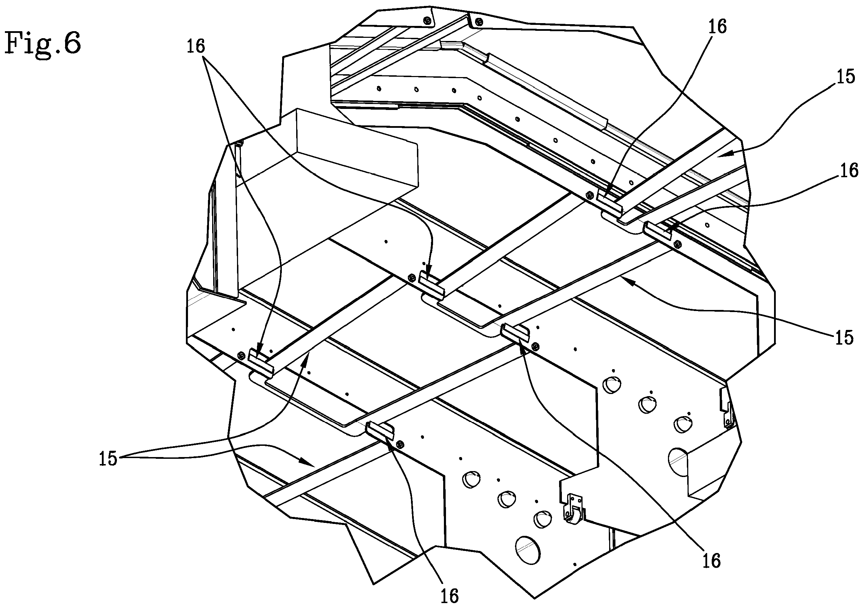

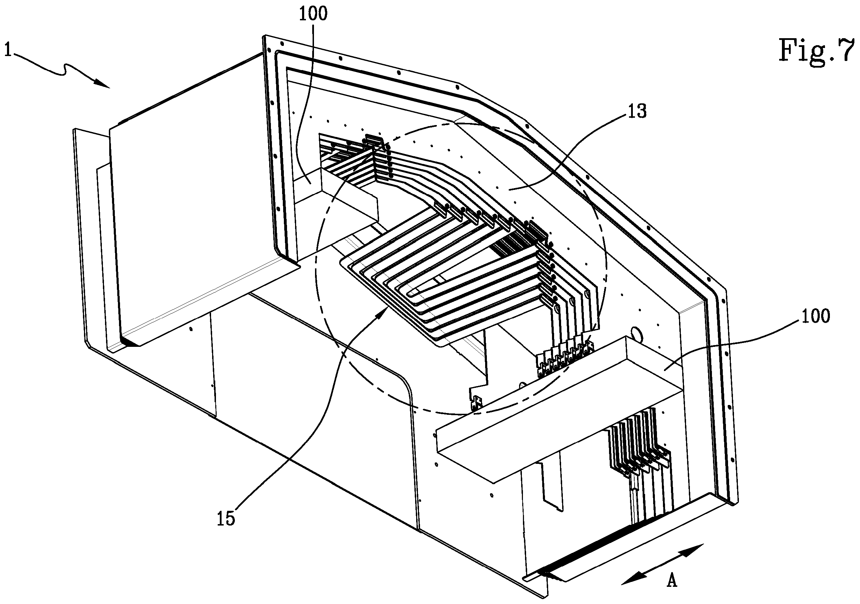

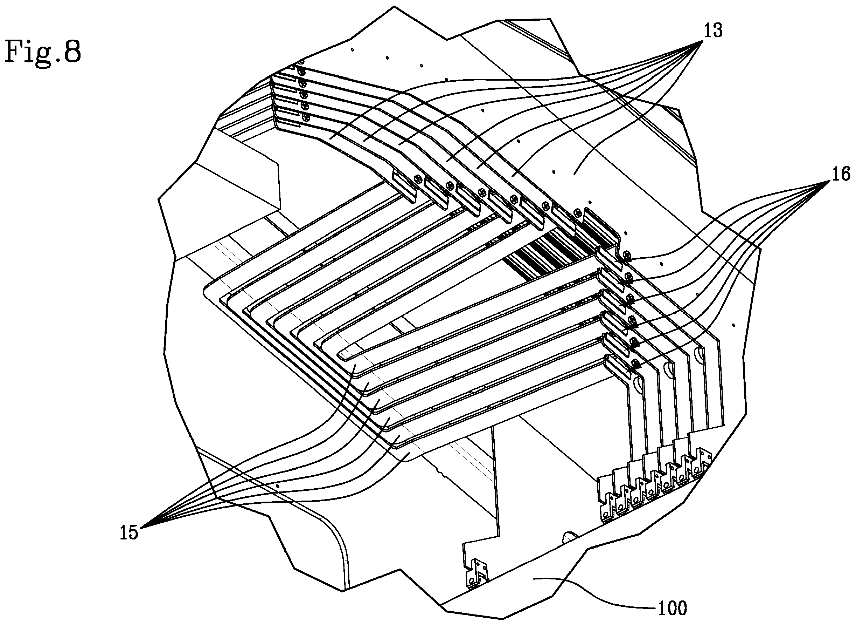

Described below is the embodiment of Figures 1 to 8, that is, the first embodiment.

According to this description, the technical features or functions described with reference to the first embodiment can, where compatible, also be applied to the remaining embodiments.

Between the base portions 12 and/or between the guides 100 there is an area 200 covered by the upper protective wall 11 and above which the load-bearing structure 13 also extends (in the case illustrated by way of a non-limiting example of the portal type).

The modules 10 are slidable independently of each other in such a way that the distance between two adjacent modules 10 can vary between a minimum value corresponding to a minimum covering effect of the adjacent modules 10, for example in the case of a completely closed or retracted covering 1, and a maximum value corresponding to a maximum covering effect of the adjacent modules 10, for example in the case of an active covering 1 for maximum covering of the underlying area 200.

The modules 10 are positioned in such a way that the upper protective walls 11 of adjacent modules 10 are at least partly superposed on each other, in particular both in the condition of minimum distance (maximum superposing area) and in the condition of maximum distance between the adjacent modules 10 (minimum superposing area).

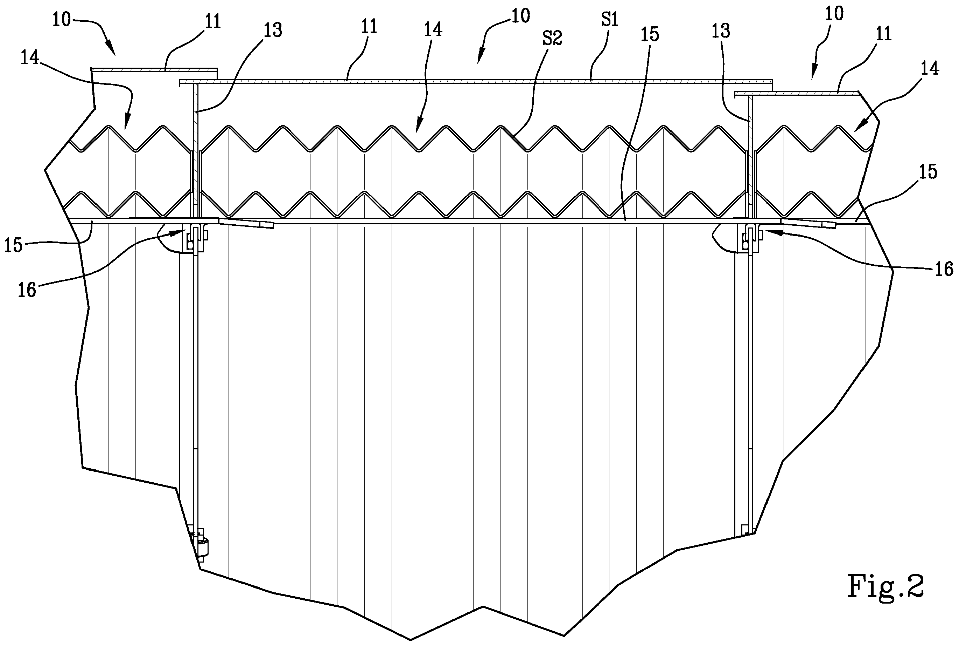

Each module 10 also comprises an extendible protective element 14, in particular a bellows (not shown in Figure 1 for simplicity of description but shown in Figure 2), which is extendible along the sliding direction "A" of the module 10 and is positioned below the upper wall 11 to define a second protective surface "S2" (Figure 2) with a variable extension between the two adjacent modules 10. Each bellows 14 extends between the load-bearing structures 13 of the two adjacent modules 10 and has a first side fixed to the load-bearing structure 13 of the module (or alternatively directly to the upper wall 11) and a second side, opposite the first side, configured for connection to the adjacent module 10. In this way, the bellows 14 defines a barrier to liquid and/or detritus which can penetrate between the two upper walls 11 of two adjacent modules 10, preventing the reaching of the area 200 below. Advantageously, the load-bearing structure 13 of each module 10 has a support 15 configured to define a lower supporting surface for the bellows 14 in such a way that the bellows 14 slides on the supporting surface during a relative extension/retraction movement resulting from the sliding of the module 10 on the respective guides 100.

According to a preferred embodiment and in accordance with the accompanying drawings, the support 15 is made by a protruding structure mounted in a cantilever fashion on a vertical wall of the load-bearing structure 13. Moreover, the above-mentioned supporting surface defined by the support 15 for the bellows 14 is substantially parallel to the upper wall 11 of the module 10 and/or to the sliding direction "A" of the module 10 on the guide 100. The assembly of the support 15 on the load-bearing structure 13 may be performed, for example, by fixing with threaded elements of one or more end flanges of the support 15 to the load-bearing structure 13.

Looking in more detail, the support 15 is preferably "C", "U" or "V" shaped with concavity facing towards the load-bearing structure 13. Preferably, moreover, the support 15 has a planar shape (that is to say, lying flat) and/or has a flat transversal cross-section (that is to say, with a main dimension in the direction of the width) extending along a line of extension of the support 15.

Moreover, each support 15 has a configuration preferably tapered away from the load-bearing structure 13 and the supports 15 of adjacent modules 10, one after another, have a decreasing extension in such a way that, in the retracted configuration of the cover 1 with minimum distance between the modules, the supports 15 of the modules 10 are at least partly inserted or nested with each other to define a compact structure, preferably coplanar or substantially coplanar. In other words, in the retracted configuration of the cover 1 each support 15 is included within the shape of the support 15 of an adjacent module 10 and in turn includes or surrounds the shape of the support 15 of the opposite adjacent module 10.

In order to support the respective support 15, which is configured in a cantilever fashion, the load-bearing structure 13 of each module 10 has a pair of runners 16 configured to receive in a sliding form respective lateral portions of the support 15 of an adjacent module 10 in such a way as to support an end portion of the support 15, distal relative to the anchoring point of the support 15 to the respective upper wall 11 and/or load-bearing structure 13, during at least a part of an operating movement of the module 10 relative to the adjacent module 10 and in particular at least in the condition of maximum distance between the two modules 10. Preferably and advantageously, the runners 16 support the support 15 of the adjacent module along the entire movement towards/away of the respective module 10 and the adjacent module 10.

Preferably, the two runners 16 of each load-bearing structure 13 and associated with the support 15 of the adjacent module 10 are positioned in a position inside the concavity defined by the respective support 15. This arrangement is consistent with the nested structure of the supports 15 in the condition of maximum approach between the modules 10.

Moreover, according to the embodiment illustrated, each runner 16 is positioned at a height equal to or similar to the height of the respective support 15 in such a way that the support 15 of the adjacent module 10, slidably engaged on it, is positioned substantially alongside the support 15 of the module 10.

Moreover, according to the embodiment of the accompanying drawings, each module comprises a pair of supports 15 which are positioned on respective inclined or sloping portions of the load-bearing structure 13. Preferably, according to the embodiment illustrated, the two supports 15 of a same module have respective orientations inclined in opposite directions relative to a horizontal plane.

According to embodiments not illustrated, the two supports 15 of a same module could be horizontal, or inclined in the same direction, on the basis of the geometry of the load-bearing structure 13.

According to different embodiments not illustrated, the support 15 may have different shapes, for example linear; in that case, for each support 15 only one runner 16 can be expected on the adjacent module.

Preferably, each bellows 14 also has a portal configuration and therefore has two vertical or substantially vertical lateral portions and a central top portion, the latter being the portion of the bellows 14 supported by the respective one support 15 or by the respective supports.

Thus, the top portion of each bellows 14 is housed in a spatial region delimited at the top by the upper wall 11 of a module and at the bottom by the support (or by the supports 15) of an adjacent module 10.

The cover 1 may also comprise one or more end modules 20, equipped, or not, with respective supports according to the requirements, for completing the cover 1 in a functional and compact manner.

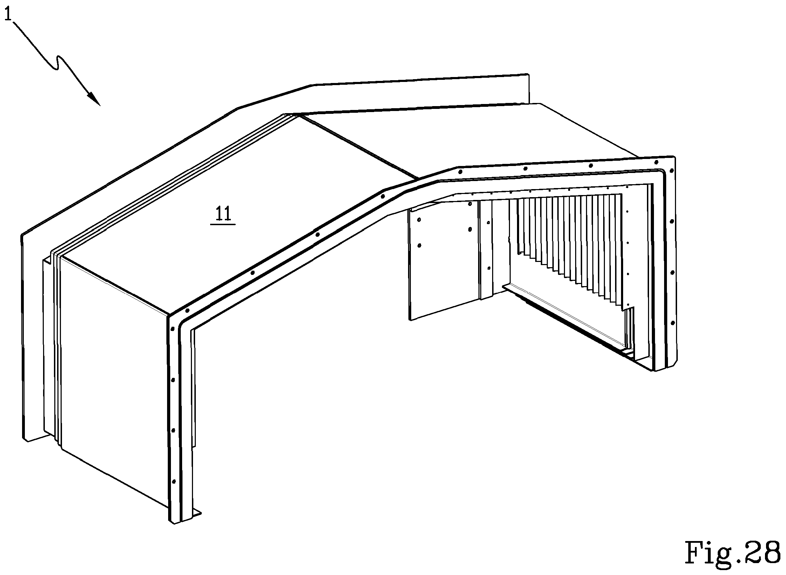

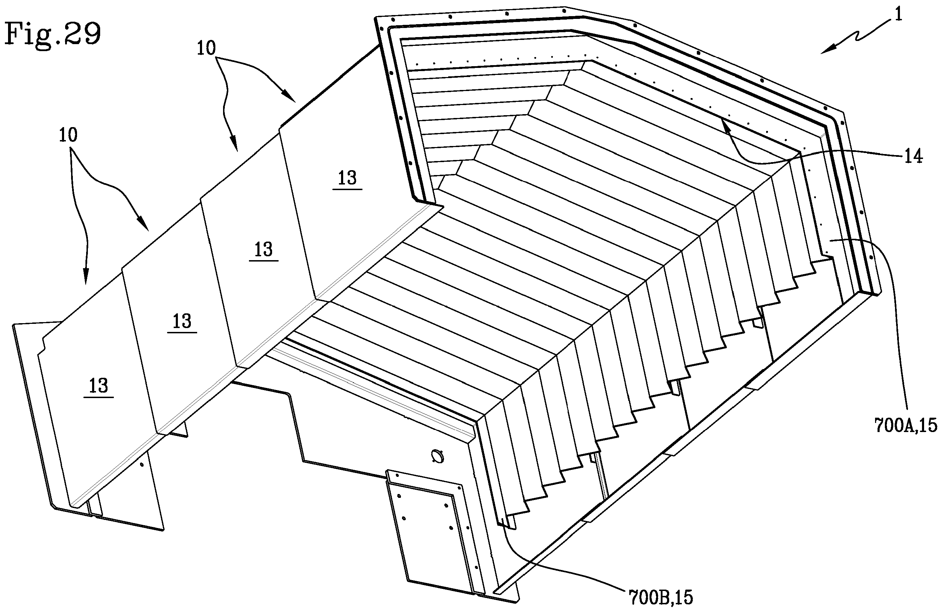

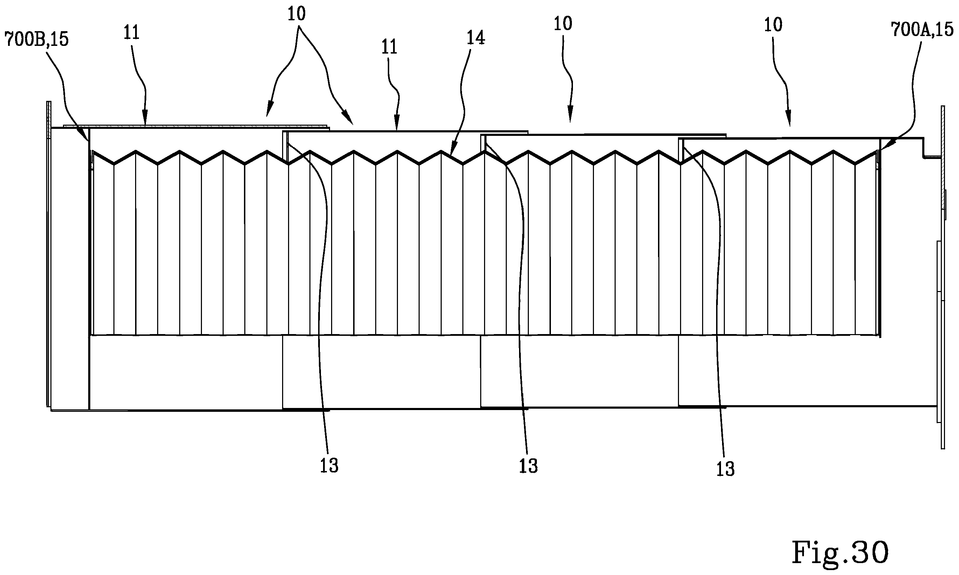

It should be noted that in the head modules 20 (that is, the first and the last of the set of modules 10) the bellows 14 might be fixed to flanges of the end modules 20, as described in more detail below and illustrated in Figures 28 to 31.

The present invention achieves the preset aims, overcoming the disadvantages of the prior art.

The structure of each module according to the invention is in effect such as to optimise the protective effect of the underlying area whilst maintaining a simple and compact structure, in particular without the need for complex bellows supporting structures which are supported (at least in the central top part) entirely by the modules.

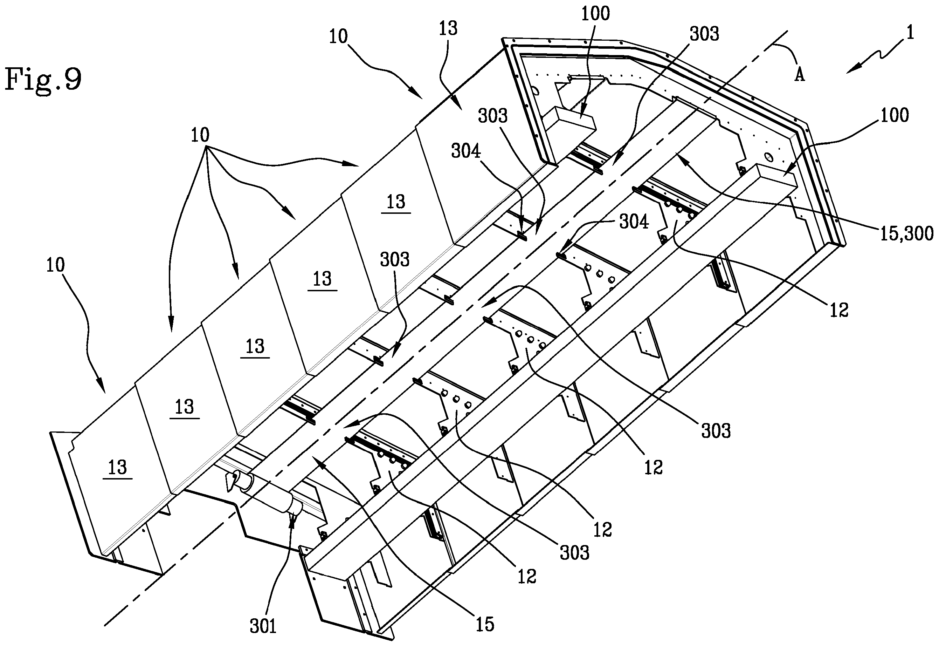

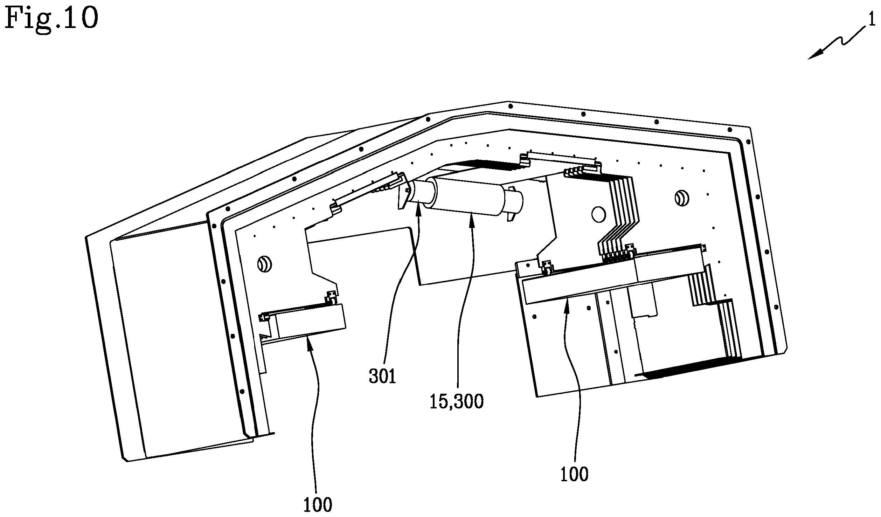

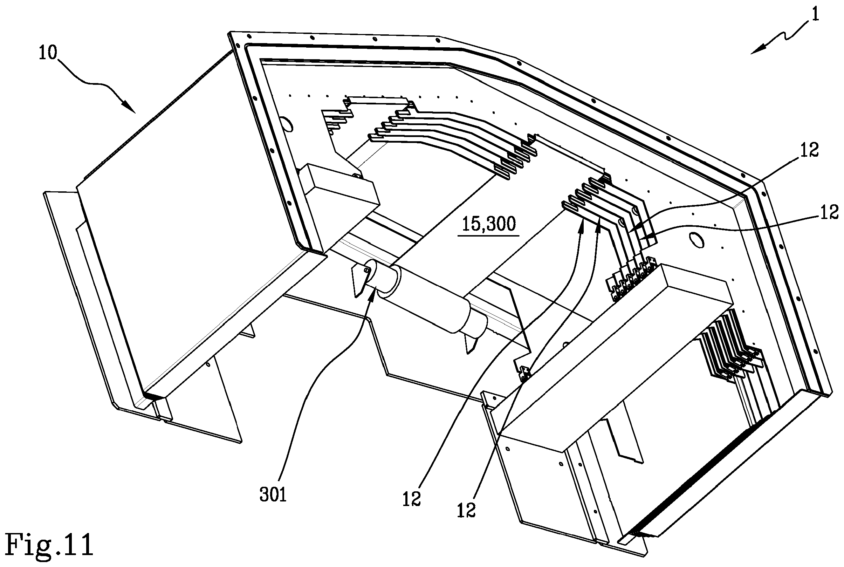

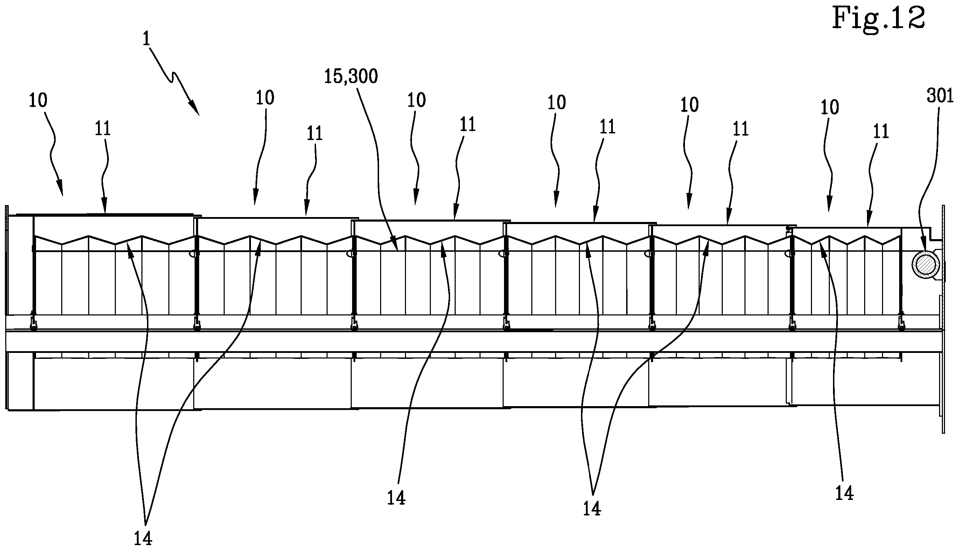

The embodiment of Figures 9 to 12, that is, the second embodiment, is described below.

According to this embodiment, the support 15 is defined by a sheet 300, which can be wound and unwound by a roller 301.

The roller 301 is fixed to a module 10, preferably a head module, or alternatively it may be fixed to a frame of the machine to which is applied the cover 1.

The sheet 300 is fixed at a first end to the roller 301 and at a second end to another module 10, preferably to the tail module (that is, the last in the series) or to the machine frame.

The bottom of the sheet 300 supports the protective element 14 of the bellows type (it is irrelevant whether the bellows protective element 14 is a single bellows or is defined by a plurality of bellows).

During the movement of the modules 10 away from each other along the direction A the sheet 300 is unwound by the roller 301, so as to extend (in fact, one end of the sheet 300 is fixed relative to the machine frame whilst the other is movable as one with a module 10).

Preferably, the roller 301 comprises a spring designed to apply a force (torsional rotation torque of the roller 301) which pulls in the sheet 300 being wound.

Preferably, the base structure 12 of each module 10 comprises a central slot 303, shaped to allow the free passage of the sheet 300.

More preferably, each module 10 is equipped with fins 304 for supporting the sheet 300.

The fins 304 are fixed to the structure 13 of the modules 10 (more preferably carried by the base portion 12).

In this way, the sheet 300 is supported, in its unwinding / winding motion, by the fins 304.

Figures 9 to 11 do not illustrate the protective element 14 of the bellows type: it is located in the inner zone of the protective cover 1, above the sheet 300, that is, in the zone between the upper wall 11 and the sheet 300 (below the upper wall 11).

It should be noted, that according to the second embodiment of Figures 9 to 11, the support 15 is preferably a single support for all the one or more bellows type protective elements 14 of the cover 1.

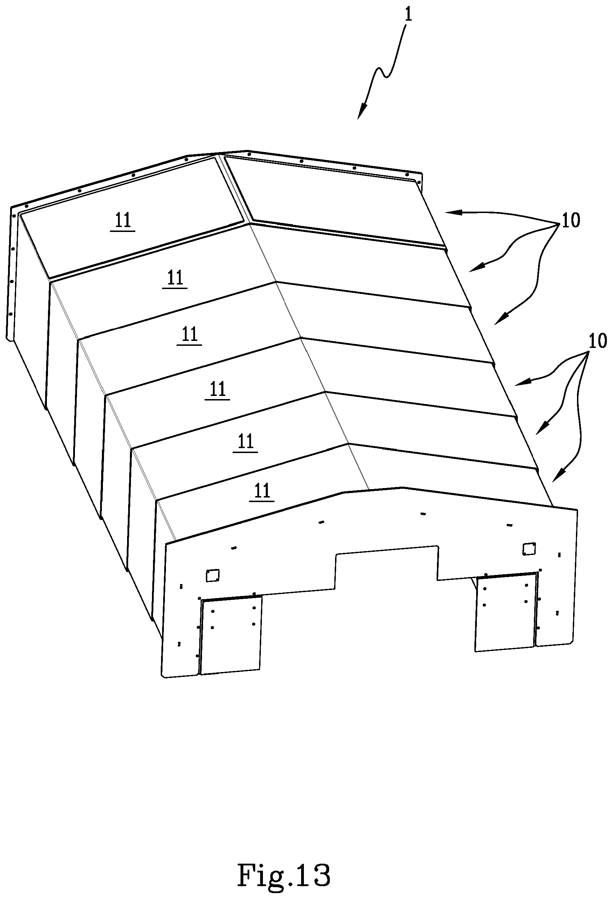

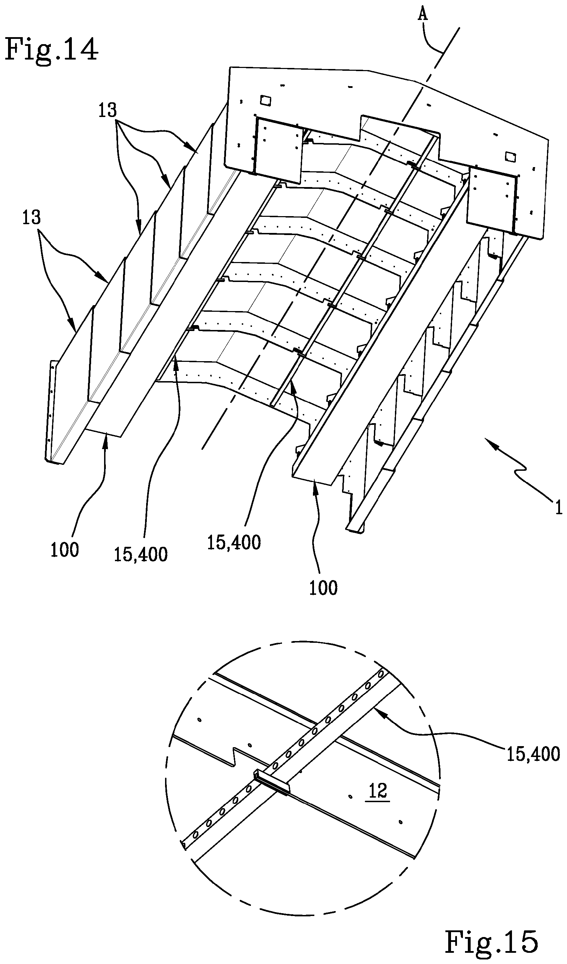

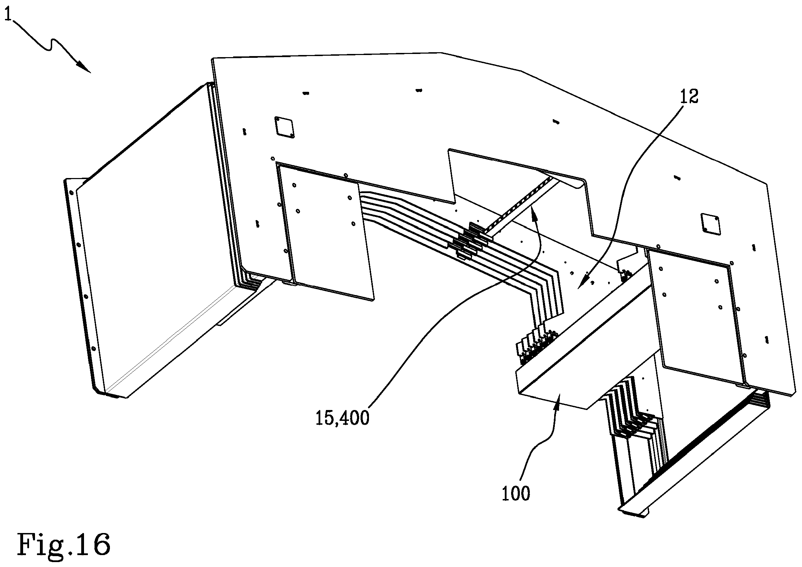

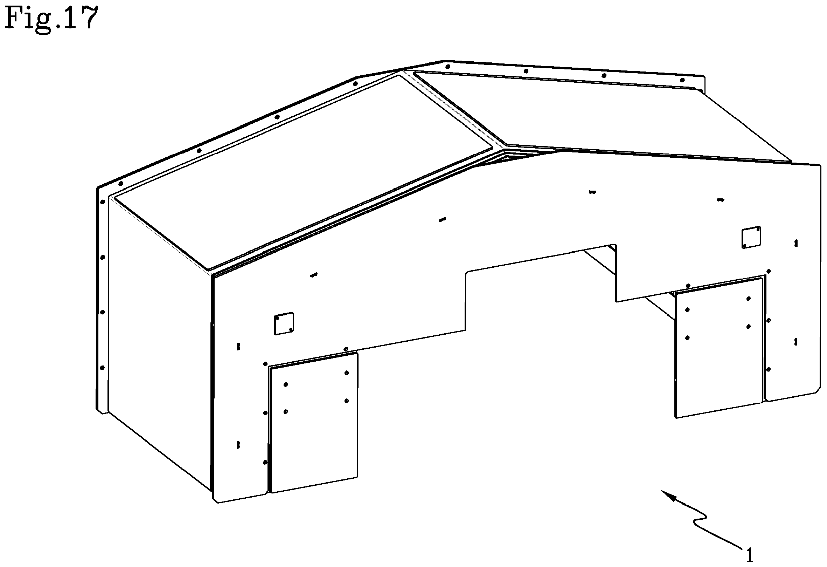

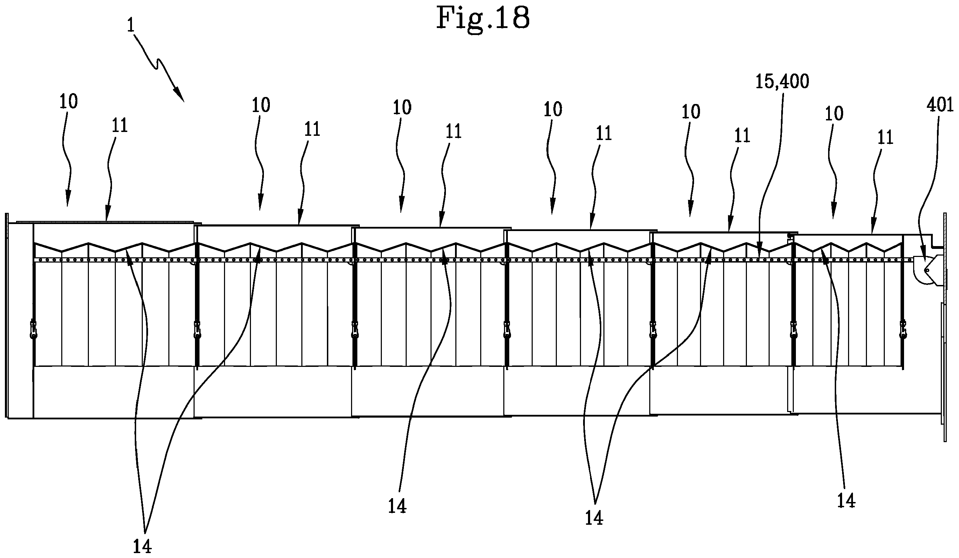

The embodiment of Figures 13 to 18 is described below.

According to the third embodiment, illustrated in Figures 13 to 18, the support 15 comprises at least one chain 400.

The chain 400 is wound on a rotary device 401 (preferably a roller), preferably of the idle type (preferably, in the latter case, the rotary device is equipped with a spring, preferably torsional, designed to apply a return force on the chain 400) or driven by a drive unit.

The rotary device 401 or roller 401 may be fixed to a head module 10, which may be movable or fixed relative to the frame of the machine to which the cover is applied.

The chain 400 may be fixed, at one end to the rotary device 401 and at the other end to a head module 10 (module opposite to that to which the rotary device 401 is fixed), module 10 which may be fixed or movable.

It should be noted that one end of the chain 400 is, along the direction of movement A, fixed (that is, not movable) relative to the frame of the machine to which the cover 1 is applied, whilst the other end is movable, along the direction of movement A, relative to the frame of the machine to which the cover 1 is applied.

It should be noted that, preferably, the support 15 comprises a pair of chains 400, right and left, as clearly illustrated in the accompanying drawings.

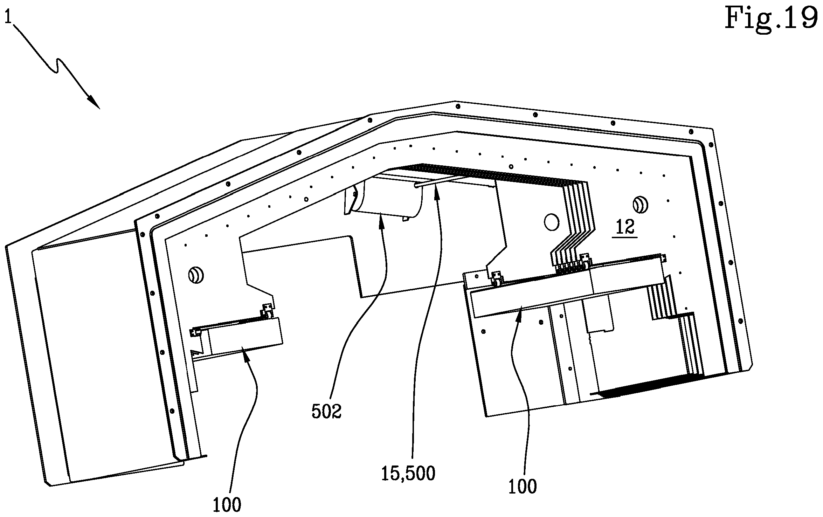

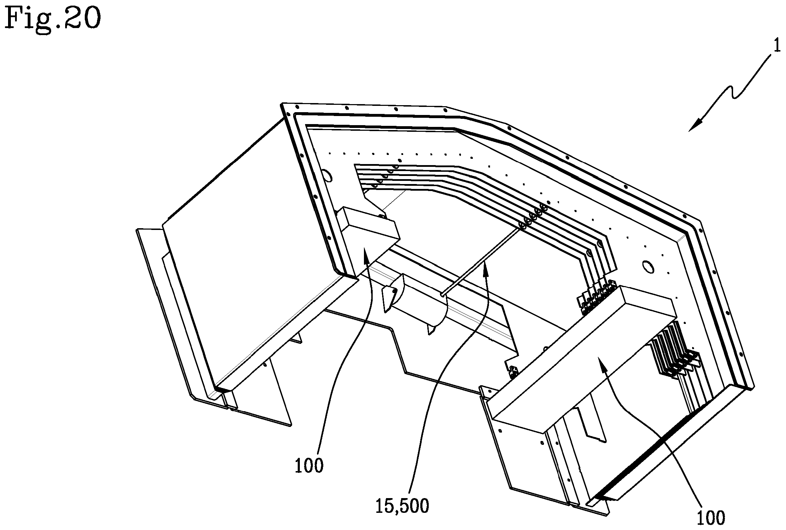

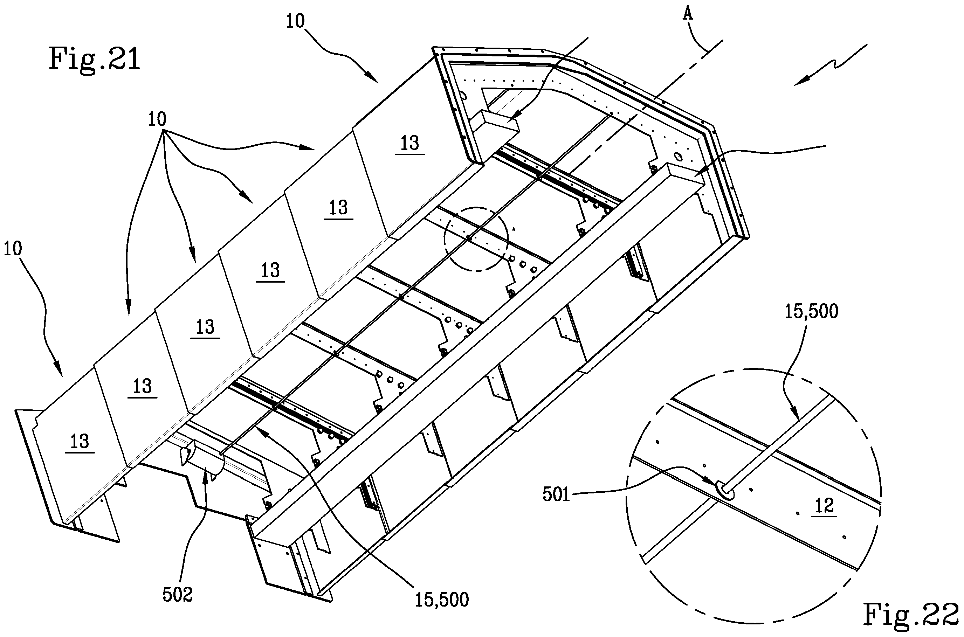

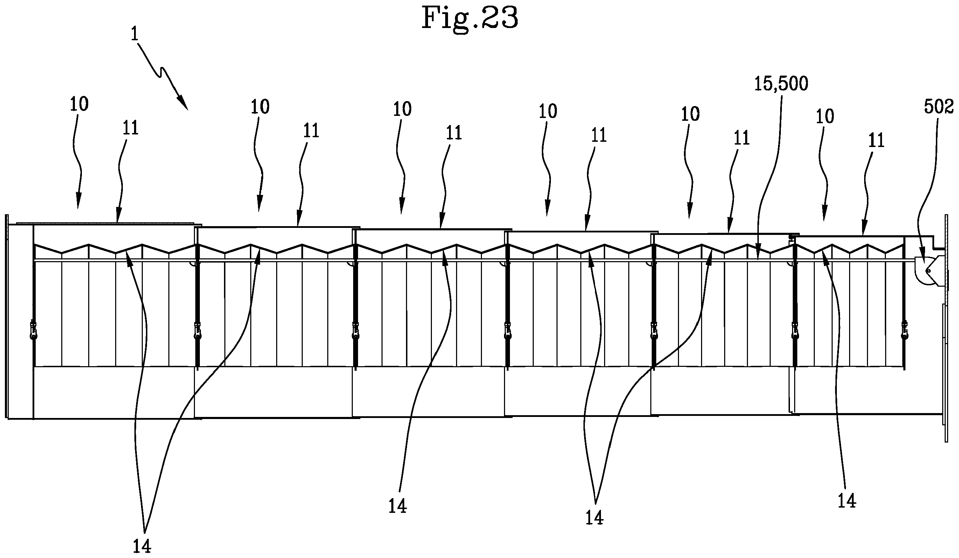

A variant of the cover and the relative module 10 illustrated in Figures 13 to 18 is illustrated in Figures 19 to 23.

In this variant embodiment, the chain 400 is replaced by a cable 500.

For this, all the considerations already made for the embodiment with a chain substantially apply (Figures 13 to 18).

Preferably, in this case, the base portion 12 is provided with a through opening 501 through which the cable 500 passes freely.

The cable 500 may be made of any material, preferably metal, plastic, synthetic fibres, carbon fibres and composites.

Also according to this embodiment, the cable 500 is wound on a rotary device 502, driven preferably by a drive unit or of the idle type (preferably, in the latter case, the rotary device is equipped with a spring, preferably torsional, designed to apply a return force on the cable 500).

The cable 500 may be fixed, at one end to the rotary device 502 and at the other end to a head module 10 (module opposite that to which the rotary device 502 is fixed).

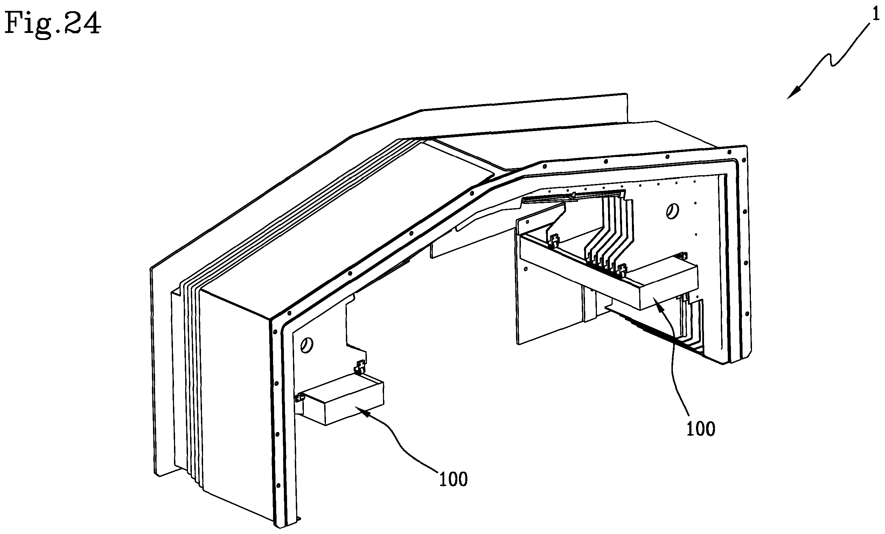

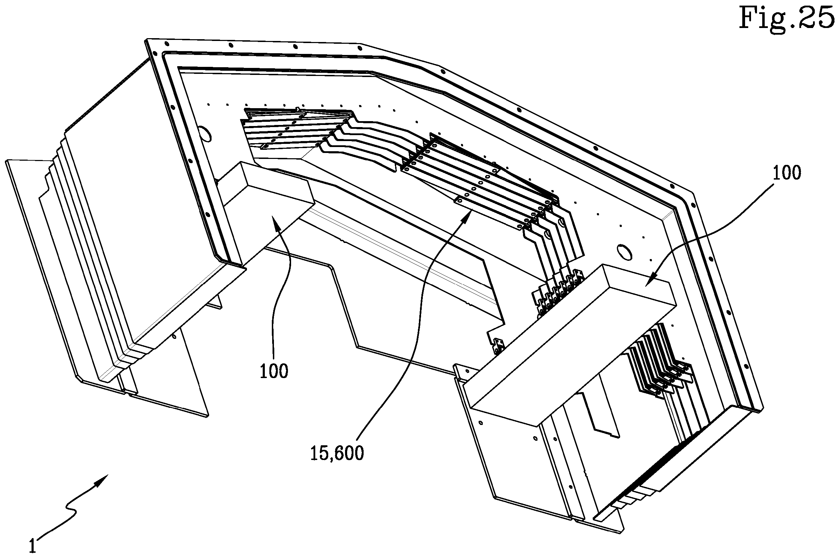

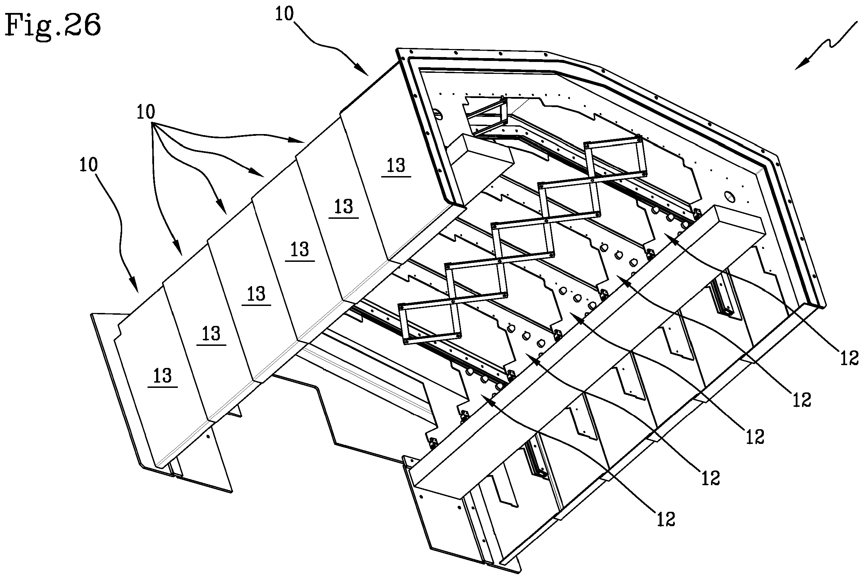

It should be noted, more generally speaking, that one end of the cable 500 is movable during the movement of the modules 10 along the direction A, whilst the other end of the cable 500 is fixed (relative to the machine frame) during the movement of the modules 10 along the direction A. Figures 24 to 27 illustrate a further embodiment of the module 10 and of the cover 1 according to the invention.

According to this embodiment, the support 15 comprises a pantograph type device 600.

The pantograph type device 600 comprises a plurality of rods, hinged to each other to define a pantograph type structure.

It should be noted that the rods are connected to the different modules 10 at connection points.

Preferably, the connection points are defined by pivoting or hinging points of the rods.

More specifically, one of the connection points, the outermost one on one side, is fixed to a tail module 10 connected (fixed) to the frame of the machine, whilst another connection point, the outermost one on the opposite side, is fixed to a head module 10.

It should be noted that the pantograph device 600 extends in the configuration of maximum extension (opening) of the modules 10 and retracts in the retracted (closed) configuration of the modules 10.

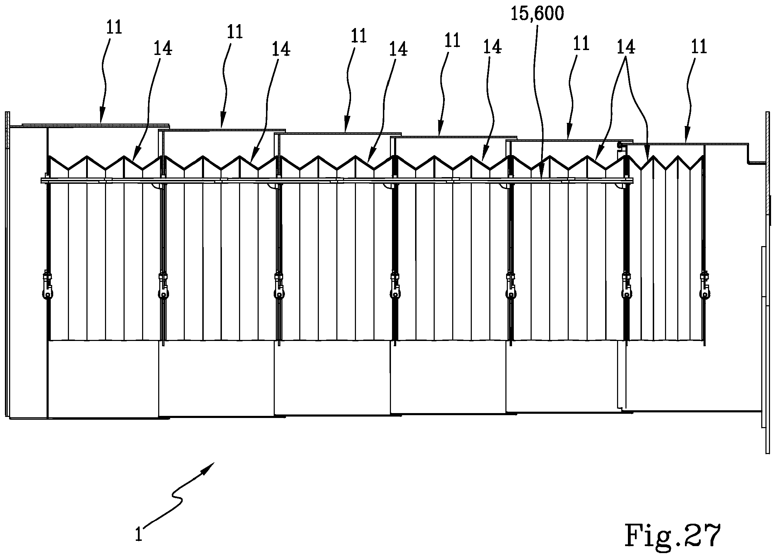

As shown in Figure 27, the bellows 14 (made as a single piece or in several separate pieces, each connecting a module 10 and the adjacent one) is supported at the bottom by the pantograph device 600.

The sixth embodiment, not covered by the claims, is described below, illustrated in Figures 28 to 30.

According to this embodiment, the supporting device 15 comprises a first end flange 700A, connected to a module 10 (preferably a head module, fixed to the machine) and a second end flange 700B (preferably a module 10 movable along the direction of movement A).

It should be noted that, also according to this sixth embodiment, the supporting device 15 is positioned below the upper wall 11.

The bellows 14 are therefore rigidly connected, at the respective ends, to the first and second end flange (700A, 700B).

Preferably, the bellows 14 are made of a single element.

It should be noted that, according to this embodiment, the intermediate modules 10 do not rest on the guides of the machine (not illustrated) but are the ones resting on the adjacent one, to form a self-supporting structure.

The bellows 14 are also self-supported through the constraints defined by the first and second end flange (700A, 700B).

## Claims

1. A module (10) for telescopic protective covering, comprising:
- a protective upper wall (11) forming a first protective surface (S1) and movable along a movement direction (A);
- a load-bearing structure (13) for supporting the upper wall (11);
- an extendible protective element (14) of the bellows type extendible along a sliding direction (A) of the module (10), the protective element (14) being positioned below the upper wall (11), the extendible protective element (14) defining a second protective surface (S2) with a variable extension between two adjacent modules (10);
wherein the module comprises a support (15) configured for retaining the extendible protective element (14) and located below the upper wall (11), **characterised in that**
the load-bearing structure (13) has the above-mentioned support (15) configured to define a lower supporting surface for the extendible protective element (14) in such a way that the extendible protective element (14) slides on the supporting surface during a relative extension/retraction movement resulting from the movement of the module (10) along the movement direction (A), wherein the covering module (10) comprises at least one base portion (12) designed for slidably coupling with at least one respective guide (100) of the module, and the load-bearing structure (13) extends vertically between the upper wall (11) and the base portions (12) for supporting the upper wall (11) relative to the base portions (12).

2. The telescopic protective covering module (10) according to claim 1, wherein:
- the protective element (14) is coupled at a first side to the upper wall (11) and/or to the load-bearing structure (13), the extendible protective element (14) also having an opposite side configured for connecting to an adjacent module (10) to define a second protective surface (S2) with a variable extension between the two adjacent modules (10).

3. The module according to any one of claims 1 to 2, wherein the support (15) is mounted in cantilever fashion on the load-bearing structure (13) in a protruding configuration with respect to the load-bearing structure (13).

4. The module according to any one of claims 1 to 3, wherein the supporting surface of the support (15) is substantially parallel to the upper wall (11) and/or to the movement direction (A) of the module (10) on the guide (100).

5. The module according to any one of claims 1 to 4, wherein the load-bearing structure (13) has at least one runner (16) configured to receive in a slidable supporting fashion the support (15) of an adjacent module (10) in such a way as to support an end portion of the support (15), distal relative to an anchoring point of the support (15) to the respective upper wall (11) and/or load-bearing structure (13), during at least a part of an operating movement of the module (10) with respect to the adjacent module (10) and preferably during the entire approaching/distancing stroke of a module (10) with respect to the adjacent module (10).

6. The module according to claim 5, wherein the runner (16) is positioned at a height equal to or close to the height of the support (15) in such a way that the support (15) of the adjacent module (10), which is slidably engaged on the runner (16), is positioned substantially alongside the support (15) of the module (10).

7. The module according to any one of claims from 1 to 6, wherein the support (15) has the shape of a 'C', 'U' or 'V' with the concavity facing towards the load-bearing structure (13).

8. The module according to claim 7, wherein the support (15) has a configuration tapered away from the load-bearing structure (13).

9. The module according to any one of the preceding claims, wherein the support (15) has an extension lying flat and/or has a flat transversal cross-section with respect to a line of extension of the support (15).

10. The module according to claim 5 or 6, wherein the load-bearing structure (13) has a pair of runners (16) configured to receive in a slidable supporting fashion respective longitudinal side by side portions of the support (15) of an adjacent module (10), the runners (16) being positioned in a position inside the concavity.

11. The module according to any one of claims 1 to 10, wherein the load-bearing structure (13) has a portal shape.

12. The module according to any one of claims 1 to 11. wherein the load-bearing structure (13) has a pair of base portions (12) between which there is an area (200) covered by the protective upper wall (11).

13. The module according to any one of claims 1 to 2, wherein the support (15) comprises at least one sheet (300), which can be wound and unwound by a roller (301), the sheet (300) being fixed at one end to the roller (301) and at the other end to another one of the modules (10) or to a frame of a machine tool.

14. The module according to the preceding claim, wherein the roller (301) comprises a spring designed to apply a return force which recalls the sheet (300) being wound.

15. The module according to any one of claims 1 to 2, wherein the support (15) comprises at least one chain (400) or cable (500), which may be wound and unwound by a roller (401, 502), fixed to a module (10) or with respect to a frame of a machine tool, the chain (400) or cable (500) being fixed at one end to the roller (401, 502) and at the other end to a module (10) or to a frame of a machine tool.

16. The module according to the preceding claim, wherein the roller (401, 502) comprises a spring designed to apply a return force which recalls the chain (400) or the cable (500) being wound.

## Patentansprüche

1. Modul (10) für teleskopische Schutzabdeckung, umfassend:
- eine obere Schutzwand (11), die eine erste Schutzfläche (S1) bildet und entlang einer Bewegungsrichtung (A) beweglich ist;
- eine lasttragende Struktur (13) zum Stützen der oberen Wand (11);
- ein ausfahrbares Schutzelement (14) des Balgtyps, das entlang einer Gleitrichtung (A) des Moduls (10) ausfahrbar ist, wobei das Schutzelement (14) unter der oberen Wand (11) positioniert ist, wobei das ausfahrbare Schutzelement (14) eine zweite Schutzfläche (S2) mit einer variablen Ausdehnung zwischen zwei benachbarten Modulen (10) definiert;
wobei das Modul einen Träger (15) umfasst, der zum Halten des ausfahrbaren Schutzelements (14) ausgelegt ist und sich unter der oberen Wand (11) befindet, **dadurch gekennzeichnet, dass** die lasttragende Struktur (13) den oben genannten Träger (15) aufweist, der ausgelegt ist, um eine untere Stützfläche für das ausfahrbare Schutzelement (14) zu definieren, so dass das ausfahrbare Schutzelement (14) während einer relativen Ausfahr-/Einfahrbewegung, die sich aus der Bewegung des Moduls (10) entlang der Bewegungsrichtung (A) ergibt, auf der Stützfläche gleitet, wobei das Abdeckmodul (10) mindestens einen Basisabschnitt (12) umfasst, der zum verschiebbaren Koppeln mit mindestens einer jeweiligen Führung (100) des Moduls bestimmt ist, und sich die lasttragende Struktur (13) vertikal zwischen der oberen Wand (11) und den Basisabschnitten (12) erstreckt, um die obere Wand (11) relativ zu den Basisabschnitten (12) zu stützen.

2. Modul (10) teleskopischer Schutzabdeckung nach Anspruch 1, wobei:
- das Schutzelement (14) an einer ersten Seite mit der oberen Wand (11) und/oder der lasttragenden Struktur (13) gekoppelt ist, wobei das ausfahrbare Schutzelement (14) auch eine gegenüberliegende Seite aufweist, die zum Verbinden mit einem benachbarten Modul (10) ausgelegt ist, um eine zweite Schutzfläche (S2) mit einer variablen Ausdehnung zwischen den zwei benachbarten Modulen (10) zu definieren.

3. Modul nach einem der Ansprüche 1 bis 2, wobei der Träger (15) freitragend an der lasttragenden Struktur (13) in einer vorstehenden Auslegung in Bezug auf die lasttragende Struktur (13) angebracht ist.

4. Modul nach einem der Ansprüche 1 bis 3, wobei die Stützfläche des Trägers (15) im Wesentlichen parallel zur oberen Wand (11) und/oder zur Bewegungsrichtung (A) des Moduls (10) auf der Führung (100) ist.

5. Modul nach einem der Ansprüche 1 bis 4, wobei die lasttragende Struktur (13) mindestens einen Läufer (16) aufweist, der ausgelegt ist, um den Träger (15) eines benachbarten Moduls (10) in einer verschiebbaren tragenden Weise aufzunehmen, um einen Endabschnitt des Trägers (15) distal relativ zu einem Verankerungspunkt des Trägers (15) an der jeweiligen oberen Wand (11) und/oder der lasttragenden Struktur (13) während mindestens eines Teils einer Betriebsbewegung des Moduls (10) in Bezug auf das benachbarte Modul (10) und vorzugsweise während des gesamten Annäherungs-/Distanzierungshubs eines Moduls (10) in Bezug auf das benachbarte Modul (10) zu tragen.

6. Modul nach Anspruch 5, wobei der Läufer (16) auf einer Höhe positioniert ist, die gleich oder nahe der Höhe des Trägers (15) ist, so dass der Träger (15) des benachbarten Moduls (10), der verschiebbar auf dem Läufer (16) in Eingriff steht, im Wesentlichen entlang des Trägers (15) des Moduls (10) positioniert ist.

7. Modul nach einem der Ansprüche 1 bis 6, wobei der Träger (15) die Form eines "C", "U" oder "V" aufweist, wobei die Konkavität der lasttragenden Struktur (13) zugewandt ist.

8. Modul nach Anspruch 7, wobei der Träger (15) eine Auslegung aufweist, die sich von der lasttragenden Struktur (13) wegführend verjüngt.

9. Modul nach einem der vorhergehenden Ansprüche, wobei der Träger (15) eine flachliegende Ausdehnung und/oder einen flachen Querschnitt bezüglich einer Ausdehnungslinie des Trägers (15) aufweist.

10. Modul nach Anspruch 5 oder 6, wobei die lasttragende Struktur (13) ein Paar von Läufern (16) aufweist, die ausgelegt sind, um in einer verschiebbaren tragenden Weise jeweilige längliche Seite-an-Seite-Abschnitte des Trägers (15) eines benachbarten Moduls (10) aufzunehmen, wobei die Läufer (16) in einer Position innerhalb der Konkavität positioniert sind.

11. Modul nach einem der Ansprüche 1 bis 10, wobei die lasttragende Struktur (13) eine Portalform aufweist.

12. Modul nach einem der Ansprüche 1 bis 11, wobei die lasttragende Struktur (13) ein Paar von Basisabschnitten (12) aufweist, zwischen denen sich ein Bereich (200) befindet, der von der oberen Schutzwand (11) bedeckt ist.

13. Modul nach einem der Ansprüche 1 bis 2, wobei der Träger (15) mindestens eine Bahn (300) umfasst, die durch eine Rolle (301) auf- und abgewickelt werden kann, wobei die Bahn (300) an einem Ende mit der Rolle (301) und an dem anderen Ende mit einem anderen der Module (10) oder mit einem Rahmen einer Werkzeugmaschine befestigt ist.

14. Modul nach dem vorhergehenden Anspruch, wobei die Rolle (301) eine Feder umfasst, die dazu bestimmt ist, eine Rückstellkraft auszuüben, die die aufgewickelte Bahn (300) zurückholt.

15. Modul nach einem der Ansprüche 1 bis 2, wobei der Träger (15) mindestens eine Kette (400) oder ein Kabel (500) umfasst, die bzw. das durch eine Rolle (401, 502) auf- und abgewickelt werden kann, die bzw. das mit einem Modul (10) oder in Bezug auf einen Rahmen einer Werkzeugmaschine befestigt ist, wobei die Kette (400) oder das Kabel (500) an einem Ende mit der Rolle (401, 502) und an dem anderen Ende mit einem Modul (10) oder mit einem Rahmen einer Werkzeugmaschine befestigt ist.

16. Modul nach dem vorhergehenden Anspruch, wobei die Rolle (401, 502) eine Feder umfasst, die dazu bestimmt ist, eine Rückstellkraft auszuüben, die die aufgewickelte Kette (400) oder das aufgewickelte Kabel (500) zurückholt.

## Revendications

1. Module (10) pour revêtement protecteur télescopique, comprenant :
- une paroi supérieure de protection (11) formant une première surface de protection (S1) et mobile le long d'une direction de déplacement (A) ;
- une structure porteuse (13) pour soutenir la paroi supérieure (11) ;
- un élément de protection extensible (14) du type soufflet extensible le long d'une direction de coulissement (A) du module (10), l'élément de protection (14) étant positionné sous la paroi supérieure (11), l'élément de protection extensible (14) définissant une deuxième surface de protection (S2) avec une extension variable entre deux modules adjacents (10) ;
dans lequel le module comprend un support (15) configuré pour retenir l'élément de protection extensible (14) et situé sous la paroi supérieure (11), **caractérisé en ce que** la structure porteuse (13) comporte le support (15) susmentionné configuré pour définir une surface de support inférieure pour l'élément de protection extensible (14) de telle sorte que l'élément de protection extensible (14) coulisse sur la surface de support lors d'un mouvement d'extension/rétraction relatif résultant du déplacement du module (10) le long de la direction de déplacement (A), dans lequel le module de revêtement (10) comprend au moins une partie de base (12) conçue pour s'accoupler de manière coulissante à au moins un guide respectif (100) du module, et la structure porteuse (13) se prolonge verticalement entre la paroi supérieure (11) et les parties de base (12) pour supporter la paroi supérieure (11) par rapport aux parties de base (12).

2. Module (10) de revêtement protecteur télescopique selon la revendication 1, dans lequel :
- l'élément de protection (14) est couplé en correspondance d'un premier côté à la paroi supérieure (11) et/ou à la structure porteuse (13), l'élément de protection extensible (14) comportant également un côté opposé configuré pour se raccorder à un module adjacent (10) pour définir une deuxième surface de protection (S2) avec une extension variable entre les deux modules adjacents (10).

3. Module selon l'une quelconque des revendications 1 à 2, dans lequel le support (15) est monté en porte-à-faux sur la structure porteuse (13) dans une configuration en saillie par rapport à la structure porteuse (13).

4. Module selon l'une quelconque des revendications 1 à 3, dans lequel la surface de support du support (15) est essentiellement parallèle à la paroi supérieure (11) et/ou à la direction de déplacement (A) du module (10) sur le guide (100).

5. Module selon l'une quelconque des revendications 1 à 4, dans lequel la structure porteuse (13) comporte au moins un patin (16) configuré pour recevoir dans un mode de support pouvant coulisser le support (15) d'un module adjacent (10) de manière à supporter une partie d'extrémité du support (15), distale par rapport à un point d'ancrage du support (15) à la paroi supérieure (11) et/ou à la structure porteuse (13) respective, pendant au moins une partie d'un déplacement de fonctionnement du module (10) par rapport au module adjacent (10) et, de préférence, pendant toute la course d'approche/d'éloignement d'un module (10) par rapport au module adjacent (10).

6. Module selon la revendication 5, dans lequel le patin (16) est positionné à une hauteur égale ou proche de la hauteur du support (15) de telle sorte que le support (15) du module adjacent (10), qui est mis en prise de manière coulissante sur le patin (16), est positionné essentiellement le long du support (15) du module (10).

7. Module selon l'une quelconque des revendications 1 à 6, dans lequel le support (15) a la forme d'un « C », d'un « U » ou d'un « V », la concavité étant orientée vers la structure porteuse (13).

8. Module selon la revendication 7, dans lequel le support (15) a une configuration conique en s'éloignant de la structure porteuse (13).

9. Module selon l'une quelconque des revendications précédentes, dans lequel le support (15) comporte une extension couchée à plat et/ou comporte une section transversale plate par rapport à une ligne d'extension du support (15).

10. Module selon la revendication 5 ou 6, dans lequel la structure porteuse (13) comporte une paire de patins (16) configurés pour recevoir dans un mode de support pouvant coulisser des parties longitudinales côte à côte respectives du support (15) d'un module adjacent (10), les patins (16) étant positionnés dans une position à l'intérieur de la concavité.

11. Module selon l'une quelconque des revendications 1 à 10, dans lequel la structure porteuse (13) a une forme de portique.

12. Module selon l'une quelconque des revendications 1 à 11, dans lequel la structure porteuse (13) comporte une paire de parties de base (12) entre lesquelles se trouve une zone (200) recouverte par la paroi supérieure de protection (11).

13. Module selon l'une quelconque des revendications 1 à 2, dans lequel le support (15) comprend au moins une toile (300) qui peut être enroulée et déroulée par un rouleau (301), la toile (300) étant fixée à une extrémité au rouleau (301) et à l'autre extrémité à autre des modules (10) ou à un châssis d'une machine-outil.

14. Module selon la revendication précédente, dans lequel le rouleau (301) comprend un ressort conçu pour appliquer une force de rappel qui rappelle la toile (300) en cours d'enroulement.

15. Module selon l'une quelconque des revendications 1 à 2, dans lequel le support (15) comprend au moins une chaîne (400) ou un câble (500), qui peut être enroulé(e) et déroulé(e) par un rouleau (401, 502), fixé à un module (10) ou par rapport à un châssis d'une machine-outil, la chaîne (400) ou le câble (500) étant fixé(e) à une extrémité au rouleau (401, 502) et à l'autre extrémité à un module (10) ou à un châssis d'une machine-outil.

16. Module selon la revendication précédente, dans lequel le rouleau (401, 502) comprend un ressort conçu pour appliquer une force de rappel qui rappelle la chaîne (400) ou le câble (500) en cours d'enroulement.
